# EUROPEAN PATENT SPECIFICATION

(11) **EP 3 098 408 B1**
(45) Date of publication and mention of the grant of the patent: **31.10.2018**
(21) Application number: 16170875.5
(22) Date of filing: 23.05.2016
(51) Int. Cl.: F01N 3/20

(54) **ADDITIVE SUPPLY DEVICE**
ADDITIVZUGABEVORRICHTUNG
DISPOSITIF D'ALIMENTATION EN ADDITIF

(30) Priority: 28.05.2015 JP 2015108645
(43) Date of publication of application: 30.11.2016
(73) Proprietor: Toyota Jidosha Kabushiki Kaisha, Toyota-shi, Aichi-ken, 471-8571 (JP); KABUSHIKI KAISHA TOYOTA JIDOSHOKKI, Kariya-shi, Aichi-ken, 448-8671 (JP)
(72) Inventor: TSUCHIYA, Tomihisa, TOYOTA-SHI, AICHI-KEN, 471-8571 (JP); HOSHI, Sakutaro, KARIYA-SHI, AICHI-KEN, 448-8671 (JP); MAEDA, Shoichi, KARIYA-SHI, AICHI-KEN, 448-8671 (JP); HATTA, Masanori, KARIYA-SHI, AICHI-KEN, 448-8671 (JP)
(74) Representative: Intès, Didier Gérard André

(56) References cited:
- WO-A1-2013/072191
- WO-A1-2013/141780
- WO-A1-2014/038084
- US-A1- 2011 113 765
- US-A1- 2014 196 808

## Description

### BACKGROUND OF THE INVENTION

### 1. Field of the Invention

The present invention relates to an additive supply device.

### 2. Description of Related Art

Among known examples of an additive supply device that supplies an additive to an exhaust passage of an internal combustion engine is the system shown in International Publication No. WO 2011/096086. Such an additive supply device includes an addition valve that injects an additive into an exhaust passage, a pipe provided with a connecter connected to the addition valve, and a pump that pumps the additive from inside a tank to the pipe.

In the additive supply device, the pipe and the addition valve may be damaged if, after the pumping of the additive by the pump is stopped as the operation of the internal combustion engine is stopped, the additive remaining inside the pipe and the addition valve freezes and expands due to a temperature drop etc.

US2014196808 (A1) discloses a supply system for liquid including a liquid tank and a liquid supply line forming a passage for the liquid from the tank to an outlet of the supply system. The supply line includes at least one part configured to form at least one gas pocket communicating with the passage to take up a change of volume of the liquid in event of freezing.

### SUMMARY OF THE INVENTION

In view of the above problem, the present invention provides an additive supply device that can prevent damage to the addition valve and the pipe caused by the expansion while freezing of an additive remaining inside the addition valve and the pipe.

The present invention relates to an additive supply device according to claim 1. According to one aspect of the present disclosure, an additive supply device including an addition valve, a pipe, and a pump is provided. The addition valve is configured to inject an additive into an exhaust passage. The pipe is provided with a connector connected to the addition valve. The pump is configured to pump the additive from inside a tank to the pipe. The additive supply device has the following characteristics. That is, the addition valve is provided with a connection port that communicates with the inside of the connector when the addition valve is connected to the connector. An inner upper end of the connector is located at a position higher than the position of the connection port when the addition valve is connected to the connector. A pressure accumulation portion is provided in an upper part inside the connector, at a position higher than the position of the connection port when the addition valve is connected to the connector. The pressure accumulation portion is configured to accumulate compressed air that expands to a volume equal to or larger than the volume upon freezing and expansion of the additive present inside the addition valve and the pipe at the time of stop so that, when the pumping of the additive by the pump is stopped, accumulated compressed air expands to a volume equal to or larger than the volume upon freezing and expansion of the additive present inside the addition valve and the pipe at the time of stopping the pump

According to the additive supply device of such a configuration, when the additive inside the tank is pumped to the pipe by the pump, air inside the pipe is accumulated in the pressure accumulation portion provided in an upper part inside the connector, and this air is compressed under the pressure of the additive inside the pipe. When the pumping of the additive by the pump is stopped, the pressure of the additive inside the pipe and the addition valve decreases, so that the compressed air in the pressure accumulation portion provided inside the connector expands. Then, the additive present inside the pipe is pushed back into the tank by the amount of expansion of the compressed air. The above-described expansion of the compressed air is caused so that the volume of the compressed air becomes equal to or larger than the volume upon freezing and expansion of the additive present inside the addition valve and the pipe when the pumping of the additive by the pump is stopped. Thus, as the compressed air expands, a space is created inside the pipe that allows the expansion of the additive present inside the addition valve and the pipe when the additive freezes and expands due to a temperature drop etc. Accordingly, even if the additive present inside the addition valve and the pipe freezes and expands, damage caused thereby to the addition valve and the pipe is prevented.

In the above additive supply device, the addition valve may be connected to the connector while extending in the horizontal direction, and the connector may be configured to receive the additive inside the pipe from below and pass the additive through the connection port into the addition valve. In this case, the flow direction of the additive that flows through the pipe, the connector, and the addition valve in this order is directed upward inside the pipe and then changed to the horizontal direction inside the connector before the additive flows into the addition valve. Accordingly, air contained in the additive is less likely to flow from the inside of the connector toward the side of the addition valve, and this air is more likely to be accumulated in the pressure accumulation portion provided in an upper part inside the connector.

In the above additive supply device, an additive return passage may be provided, and a check valve may be provided in the return passage. The additive return passage may branch from the pipe through which the pump and the connector communicate with each other and may lead to the tank. Alternatively, in the above additive supply device, an additive return passage may be provided, and a three-way valve may be provided at a branch point of the return passage in the pipe. The additive return passage may branch from the pipe through which the pump and the connector communicate with each other and may lead to the tank.

According to the additive supply device having the structure as described above, the additive present inside the pipe is quickly pushed back into the tank through the return passage and the check valve or through the three-way valve and the return passage. Thus, even if the additive present inside the addition valve and the pipe freezes and expands, damage caused thereby to the addition valve and the pipe is prevented.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic overall view showing an additive supply device of one embodiment of the present invention;
FIG. 2a) is a time-chart showing a change over time in pressure inside a pipe in the additive supply device; FIG. 2b) is a time-chart showing a change over time in volume of compressed air; and FIG. 2c) is a time-chart showing a change over time in volume of urea water remaining inside an addition valve and the pipe; and
FIG. 3 is a schematic view showing a pump and the vicinity thereof of an embodiment that is a first modified example of the embodiment.

### DETAILED DESCRIPTION OF EMBODIMENTS

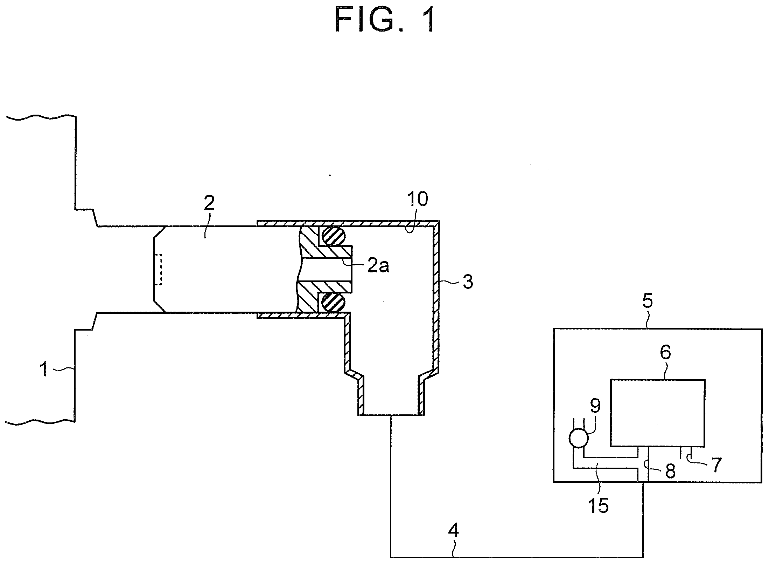

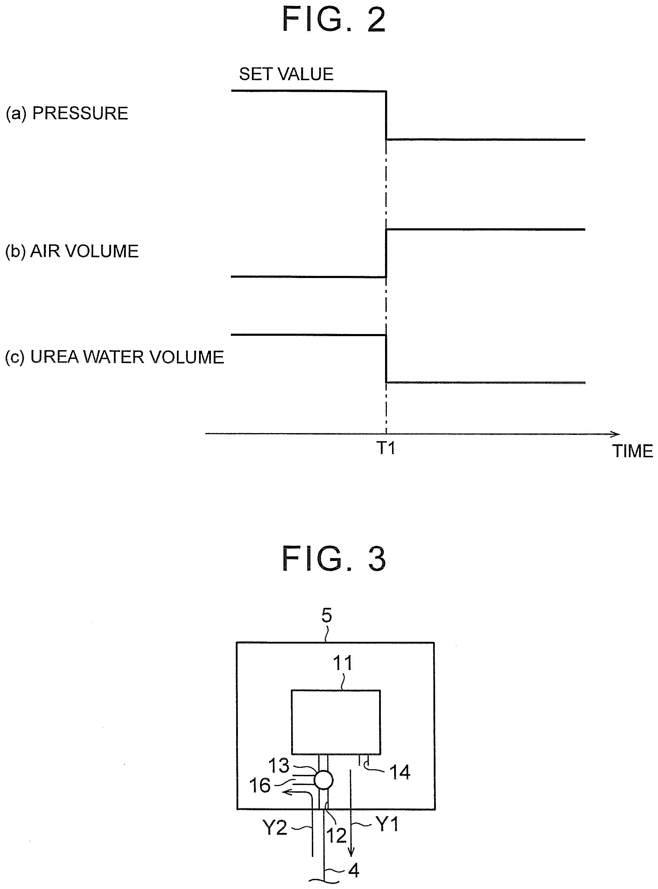

In the following, one embodiment of an additive supply device will be described with reference to FIG. 1 and FIG. 2. The additive supply device shown in FIG. 1 supplies a reduction agent, such as urea water, as an additive to an exhaust passage 1 of an internal combustion engine. The additive supply device includes an addition valve 2 that injects urea water into the exhaust passage 1, a pipe 4 provided with a connector 3 connected to the addition valve 2, and a pump 6 that pumps urea water from inside a tank 5 to the pipe 4.

A constant-pressure circulation pump is used as the pump 6. When rotating in the normal direction, the pump 6 suctions the urea water inside the tank 5 through a suction port 7 and then pumps the urea water through a discharge port 8 that leads to the pipe 4. A return passage 15 that branches from an intermediate point of the pipe 4 and communicates with the tank 5 is provided. A check valve 9 with throttle is provided at a position in the vicinity of the other end of the return passage 15 relative to the branch point. That is, the discharge port 8 communicates with the inside of the tank 5 from the return passage 15 through the check valve 9. The check valve 9 inhibits the flow of the urea water from the side of the tank 5 toward the side of the discharge port 8 (back-flow). When the pressure of the urea water inside the discharge port 8 and the pipe 4 becomes equal to or higher than a predetermined set pressure, the check valve 9 opens to allow the flow of the urea water from the side of the discharge port 8 toward the side of the tank 5.

Accordingly, when the urea water is pumped from the discharge port 8 to the pipe 4 as the pump 6 rotates in the normal direction, the pressure of the urea water inside the pipe 4 is adjusted to the set pressure. When the rotation of the pump 6 is stopped, the pumping of the urea water from the discharge port 8 into the pipe 4 is stopped. On the other hand, when the pump 6 is rotated in the reverse direction, the urea water inside the pipe 4 is suctioned through the discharge port 8 into the pump 6 and then returned through the suction port 7 into the tank 5. During this process, the check valve 9 is kept closed, so that the urea water inside the tank 5 is inhibited from flowing through the check valve 9 to the discharge port 8.

The connector 3 to which the addition valve 2 is connected while extending in the horizontal direction is provided at the opposite end of the pipe 4 from the end on the side of the pump 6. A connection port 2a that communicates with the inside of the connector 3 when the addition valve 2 is connected to the connector 3 is formed in the addition valve 2. The connector 3 is configured to receive the urea water inside the pipe 4 from below and pass the urea water through the connection port 2a into the addition valve 2. Since the pressure of the urea water inside the addition valve 2 is adjusted to the set pressure, opening the addition valve 2 causes the urea water to be injected from the addition valve 2 into the exhaust passage 1. This injection of the urea water from the addition valve 2 is stopped as the addition valve 2 is closed.

The connector 3 is formed so that an inner upper end of the connector 3 is located at a position higher than the position of the connection port 2a when the addition valve 2 is connected to the connector 3. Moreover, a pressure accumulation portion 10 in which compressed air is accumulated is provided in an upper part inside the connector 3, at a position higher than the position of the connection port 2a when the addition valve 2 is connected to the connector 3.

When the urea water inside the tank 5 is pumped to the pipe 4 by the pump 6, air inside the pipe 4 is accumulated in the pressure accumulation portion 10 provided in an upper part inside the connector 3, and this air is compressed under the pressure (set pressure) of the urea water inside the pipe 4. When the pumping of the urea water by the pump 6 is stopped, the pressure of the additive inside the pipe 4 and the addition valve 2 decreases below the set pressure, so that the compressed air in the pressure accumulation portion 10 provided inside the connector 3 expands.

The pressure accumulation portion 10 is a part in which the compressed air that, when the pumping of the urea water by the pump 6 is stopped, expands to a volume equal to or larger than the volume upon freezing and expansion of the urea water present inside the addition valve 2 and the pipe 4 at the time of the stop is accumulated. That is, the capacity of the pressure accumulation portion 10, in other words, the position of the inner upper end of the connector 3 relative to the connection port 2a when the addition valve 2 is connected to the connector 3, is determined so that the compressed air can be thus accumulated in the pressure accumulation portion 10.

Next, the workings of the additive supply device will be described. FIG. 2 shows a change in volume of the compressed air accumulated in the pressure accumulation portion 10 and a change in volume of the urea water remaining inside the addition valve 2 and the pipe 4 that occur when the pumping of the urea water by the pump 6 is stopped. While the urea water is being pumped to the pipe 4 by the pump 6 rotating in the normal direction, the pressure of the urea water inside the pipe 4 (addition valve 2) is adjusted to a set value as shown in FIG. 2a). In this state, if the pumping of the urea water by the pump 6 is stopped (timing Tl), the pressure of the urea water inside the pipe 4 (addition valve 2) decreases, so that the compressed air in the pressure accumulation portion 10 provided inside the connector 3 expands as shown in FIG. 2b). Then, the urea water present inside the pipe 4 is pushed back into the tank 5 by the amount of expansion of the compressed air. As a result, the volume of the urea water remaining inside the addition valve 2 and the pipe 4 decreases as shown in FIG. 2c).

The above-described expansion of the compressed air is caused so that the volume of the compressed air becomes equal to or larger than the volume upon freezing and expansion of the urea water present inside the addition valve 2 and the pipe 4 when the pumping of the urea water by the pump 6 is stopped. Thus, as the compressed air expands, a space is created inside the pipe 4 that allows the expansion of the urea water present inside the addition valve 2 and the pipe 4 when the urea water freezes and expands due to a temperature drop etc. Accordingly, even if the urea water present inside the addition valve 2 and the pipe 4 freezes and expands, damage caused thereby to the addition valve 2 and the pipe 4 is prevented.

According to the embodiment having been described in detail, the following effects can be achieved:
(1) It is possible to prevent damage to the addition valve 2 and the pipe 4 caused by the expansion while freezing of the urea water remaining inside the addition valve 2 and the pipe 4.
(2) The addition valve 2 is connected to the connector 3 while extending in the horizontal direction, and the connector 3 is configured to receive the additive inside the pipe 4 from below and pass the additive through the connection port 2a into the addition valve 2. Thus, the flow direction of the urea water that flows through the pipe 4, the connector 3, and the addition valve 2 in this order is directed upward inside the pipe 4 and then changed to the horizontal direction inside the connector 3 before the urea water flows into the addition valve 2. Accordingly, air contained in the urea water is less likely to flow from the inside of the connector 3 toward the side of the addition valve 2, and this air is more likely to be accumulated in the pressure accumulation portion 10 provided in an upper part inside the connector 3.

The above embodiment can be modified, for example, as in a first modified example to be described below. In the first modified example, as shown in FIG. 3, a pump 11 that can be intermittently driven as a pump that pumps the urea water to the pipe 4 is provided, and a three-way valve 13 is provided at a discharge port 12 of the pump 11. The three-way valve 13 can be switched between a first switch position at which the inside of the pump 11 and the pipe 4 are connected with each other, and a second switch position at which the pipe 4 and the inside of the tank 5 communicate with each other. When the pump 11 is rotated in the normal direction to suction the urea water inside the tank 5 through a suction port 14 and pump the urea water to the pipe 4, the three-way valve 13 is switched to the first switch position, so that the urea water pumped from the pump 11 flows as indicated by the arrow Y1. In this case, the pump 11 is intermittently driven so that the pressure of the urea water inside the pipe 4 becomes the set pressure. When the pump 11 is stopped, for example, as the internal combustion engine is stopped, the three-way valve 13 is switched to the second switch position. In this case, the pumping of the urea water from the pump 11 into the pipe 4 is stopped, so that the compressed air accumulated in the pressure accumulation portion 10 of the connector 3 expands, pushing the urea water remaining inside the pipe 4 through a return passage 16 toward the tank 5. Then, the urea water is returned by the three-way valve 13 through the return passage 16 into the tank 5 as indicated by the arrow Y2.

Next, a second modified example will be described as another modified example. In the second modified example, after the pumping of the urea water by the pump 11 is stopped and the expansion of the compressed air in the pressure accumulation portion 10 is completed, the addition valve 2 is opened and the pump 11 is rotated in the reverse direction to thereby collect the urea water inside the addition valve 2, the pipe 4, and the pump 11 into the tank 5. In this case, since the urea water inside the pump 11 is suctioned into the tank 5 and the urea water does not remain inside the pump 11, it is possible to prevent damage to the pump 11 caused by the urea water inside the pump 11 freezing and expanding due to a temperature drop etc.

In the additive supply devices of the embodiment and the first and second modified examples thereof, an additive other than a reduction agent (urea water etc.) may be supplied to the exhaust passage 1.

## Claims

1. An additive supply device comprising an addition valve (2), a pipe (4), and a pump (6), the addition valve (2) being configured to inject an additive into an exhaust passage; the pipe (4) being provided with a connector (3) connected to the addition valve (2); the pump (6) being configured to pump the additive from inside a tank (5) into the pipe (4), wherein
the addition valve (2) is provided with a connection port (2a) that communicates with the inside of the connector (3) when the addition valve (2) is connected to the connector (3),
an inner upper end of the connector (3) is located at a position higher than the position of the connection port (2a) when the addition valve (2) is connected to the connector (3), and
a pressure accumulation portion (10) is provided in an upper part inside the connector (3), at a position higher than the position of the connection port (2a) when the addition valve (2) is connected to the connector (3),
the additive supply device being configured such that when the additive inside the tank (5) is pumped to the pipe (4) by the pump (6), air inside the pipe (4) is accumulated in the pressure accumulation portion (10), and this air is compressed under the pressure of the additive inside the pipe (4),
**characterized in that**
the pressure accumulation portion (10) is configured to accumulate this compressed air that expands to a volume equal to or larger than the volume upon freezing and expansion of the additive present inside the addition valve (2) and the pipe (4) at the time of stopping the pump (6),
wherein the pressure accumulation portion (10) is positioned at an inner upper end of the connector (3) relative to the connection port (2a) when the addition valve (2) is connected to the connector (3).

2. The additive supply device according to claim 1, **characterized in that**
the addition valve (2) is connected to the connector (3) while extending in the horizontal direction, and
the connector (3) is configured to receive the additive inside the pipe (4) from below and pass the additive through the connection port (2a) into the addition valve (2).

3. The additive supply device according to claim 1 or 2, **characterized in that** an additive return passage (15) is provided, and a check valve is provided in the additive return passage (15), and the additive return passage (15) branches from the pipe (4) through which the pump (6) and the connector (3) communicate with each other and leads to the tank (5).

4. The additive supply device according to claim 1 or 2, **characterized in that** an additive return passage (16) is provided, and a three-way valve (13) is provided at a branch point of the additive return passage (16) in the pipe (4), and the additive return passage (16) branches from the pipe (4) through which the pump (6) and the connector (3) communicate with each other and leads to the tank (5).

## Patentansprüche

1. Additivzuführvorrichtung, umfassend ein Zugabeventil (2), ein Rohr (4) und eine Pumpe (6), wobei das Zugabeventil (2) dazu ausgebildet ist, ein Additiv in einen Auslasskanal einzuspritzen, wobei das Rohr (4) mit einem Verbindungselement (3) versehen ist, das mit dem Zugabeventil (2) verbunden ist, wobei die Pumpe (6) dazu ausgebildet ist, das Additiv aus dem Inneren eines Behälters (5) in das Rohr (4) zu pumpen, wobei
das Zugabeventil (2) mit einem Verbindunganschluss (2a) versehen ist, der mit dem Inneren des Verbindungselements (3) kommuniziert, wenn das Zugabeventil (2) mit dem Verbindungselement (3) verbunden ist,
ein inneres oberes Ende des Verbindungselements (3) an einer Position angeordnet ist, die höher als die Position des Verbindungsanschlusses (2a) ist, wenn das Zugabeventil (2) mit dem Verbindungselement (3) verbunden ist, und
ein Drucksammelabschnitt (10) in einem oberen Teil innerhalb des Verbindungselements (3) an einer Position vorgesehen ist, die höher als die Position des Verbindungsanschlusses (2a) ist, wenn das Zugabeventil (2) mit dem Verbindungselement (3) verbunden ist,
wobei die Additivzuführvorrichtung derart ausgebildet ist, dass sich, wenn das Additiv innerhalb des Behälters (5) durch die Pumpe (6) zu dem Rohr (4) gepumpt wird, Luft innerhalb des Rohres (4) in dem Drucksammelabschnitt (10) ansammelt und diese Luft unter dem Druck des Additivs innerhalb des Rohres (4) verdichtet wird,
**dadurch gekennzeichnet, dass**
der Drucksammelabschnitt (10) dazu ausgebildet ist, die verdichtete Luft zu sammeln, die sich auf ein Volumen größer oder gleich dem Volumen nach Gefrieren und Ausdehnen des innerhalb des Zugabeventils (2) und des Rohres (4) vorhandenen Additivs zum Zeitpunkt des Stoppens der Pumpe (6)ausdehnt,
wobei der Drucksammelabschnitt (10) relativ zu der Verbindungsöffnung (2a) an einem inneren oberen Ende des Verbindungselements (3) angeordnet ist, wenn das Zugabeventil (2) mit dem Verbindungselement (3) verbunden ist.

2. Additivzuführvorrichtung nach Anspruch 1, **dadurch gekennzeichnet, dass**
das Zugabeventil (2) mit dem Verbindungselement (3) verbunden ist, während es sich in die waagrechte Richtung erstreckt, und
das Verbindungselement (3) dazu ausgebildet ist, das Additiv innerhalb des Rohres (4) von unten entgegenzunehmen und das Additiv über den Verbindungsanschluss (2a) in das Zugabeventil (2) weiterzuleiten.

3. Additivzuführvorrichtung nach Anspruch 1 oder 2, **dadurch gekennzeichnet, dass**
ein Additivrückführkanal (15) vorgesehen ist und in dem Additivrückführkanal (15) ein Rückschlagventil vorgesehen ist und der Additivrückführkanal (15) von dem Rohr (4) abzweigt, durch welches die Pumpe (6) und das Verbindungselement (3) miteinander kommunizieren, und zu dem Behälter (5) führt.

4. Additivzuführvorrichtung nach Anspruch 1 oder 2, **dadurch gekennzeichnet, dass**
ein Additivrückführkanal (16) vorgesehen ist und ein Drei-Wege-Ventil (13) an einem Abzweigungspunkt des Additivrückführkanals (16) in dem Rohr (4) vorgesehen ist und der Additivrückführkanal (16) von dem Rohr (4) abzweigt, durch welches die Pumpe (6) und das Verbindungselement (3) miteinander kommunizieren, und zu dem Behälter (5) führt.

## Revendications

1. Dispositif d'alimentation en additif comportant une soupape d'addition (2), un tuyau (4), et une pompe (6), la soupape d'addition (2) étant configurée pour injecter un additif dans un passage d'échappement ; le tuyau (4) étant pourvu d'un connecteur (3) relié à la soupape d'addition (2) ; la pompe (6) étant configurée pour pomper l'additif de l'intérieur d'un réservoir (5) dans le tuyau (4), dans lequel
la soupape d'addition (2) est pourvue d'un orifice de raccordement (2a) qui communique avec l'intérieur du connecteur (3) quand la soupape d'addition (2) est reliée au connecteur (3),
une extrémité supérieure intérieure du connecteur (3) se trouve dans une position plus haute que la position de l'orifice de raccordement (2a) quand la soupape d'addition (2) est reliée au connecteur (3), et
une partie d'accumulation de pression (10) est prévue dans une partie supérieure à l'intérieur du connecteur (3), dans une position plus haute que la position de l'orifice de raccordement (2a) quand la soupape d'addition (2) est reliée au connecteur (3),
le dispositif d'alimentation en additif étant configuré de telle sorte que quand l'additif à l'intérieur du réservoir (5) est pompé dans le tuyau (4) par la pompe (6), de l'air à l'intérieur du tuyau (4) est accumulé dans la partie d'accumulation de pression (10), et cet air est comprimé sous la pression de l'additif à l'intérieur du tuyau (4),
**caractérisé en ce que**
la partie d'accumulation de pression (10) est configurée pour accumuler cet air comprimé qui se détend à un volume égal ou supérieur au volume lors de la congélation et de la détente de l'additif présent à l'intérieur de la soupape d'addition (2) et du tuyau (4) au moment d'arrêter la pompe (6),
dans lequel la partie d'accumulation de pression (10) est positionnée au niveau d'une extrémité supérieure intérieure du connecteur (3) par rapport à l'orifice de raccordement (2a) quand la soupape d'addition (2) est reliée au connecteur (3).

2. Dispositif d'alimentation en additif selon la revendication 1, **caractérisé en ce que**
la soupape d'addition (2) est reliée au connecteur (3) tout en s'étendant dans la direction horizontale, et
le connecteur (3) est configuré pour recevoir l'additif à l'intérieur du tuyau (4) depuis le dessous et faire passer l'additif à travers l'orifice de raccordement (2a) dans la soupape d'addition (2).

3. Dispositif d'alimentation en additif selon la revendication 1 ou 2, **caractérisé en ce que**
un passage de retour d'additif (15) est prévu, et un clapet anti-retour est prévu dans le passage de retour d'additif (15), et le passage de retour d'additif (15) s'embranche depuis le tuyau (4) par l'intermédiaire duquel la pompe (6) et le connecteur (3) communiquent l'un avec l'autre et mène au réservoir (5).

4. Dispositif d'alimentation en additif selon la revendication 1 ou 2, **caractérisé en ce que**
un passage de retour d'additif (16) est prévu, et une soupape à trois voies (13) est prévue au niveau d'un point d'embranchement du passage de retour d'additif (16) dans le tuyau (4), et le passage de retour d'additif (15) s'embranche depuis le tuyau (4) par l'intermédiaire duquel la pompe (6) et le connecteur (3) communiquent l'un avec l'autre et mène au réservoir (5).
